# DEMANDE DE BREVET EUROPEEN

(11) **EP 1 777 201 A1**
(43) Date de publication de la demande: **25.04.2007**
(21) Numéro de dépôt: 06122618.9
(22) Date de dépôt: 19.10.2006
(51) Int. Cl.: C03B 33/07, B26D 3/28

(54) **Procédé et outil de traitement d'une plaque de verre revêtu d'un film protecteur.**

(30) Priorité: 20.10.2005 FR 0510702
(71) Demandeur: Adler S.A., 77230 Moussy le Neuf (FR)
(72) Inventeur: Bourgain, Eric, 75017, Paris (FR); Masson, Jean-Jacques, 94120, Fontenay sous bois (FR)
(74) Mandataire: Barbin le Bourhis, Joël

(57) **Abrégé**

Dénudage local et éventuellement découpe d'une plaque de verre revêtue d'un film protecteur.

La plaque (11) est revêtue d'un film protecteur (12) et le dénudage du verre consiste à inciser le film par au moins un organe d'incision (14A, 14B) et à au moins décoller et soulever le film sur une bande étroite (15) de celui-ci.

## Description

L'invention concerne un traitement particulier d'une plaque de verre revêtue d'un film protecteur, pendant la mise en oeuvre de celle-ci. Elle vise notamment à améliorer le découpage de ce type de verre.

Dans le domaine du bâtiment, le verre est de plus en plus utilisé. Les plaques de verre sont souvent revêtues, sur une ou deux faces, d'une couche métallique et/ou de matériau catalyseur.

Typiquement, les couches métalliques confèrent au verre des propriétés particulières (émission réduite, teinte éventuellement variable, conductivité électrique, ....) tandis que les catalyseurs donnent au verre un pouvoir auto-nettoyant.

Ces couches sont extrêmement minces et très fragiles.

Pour les protéger des différentes agressions mécaniques possibles pendant toutes les phases de manutention, transport, stockage, etc., les plaques de verre sont revêtues d'un film de polyéthylène ou vinyle. L'épaisseur d'un tel film typiquement est de l'ordre de 25 à 80 µm. Ce film protecteur doit être conservé si possible jusqu'à la phase ultime de mise en oeuvre de la plaque de verre, c'est-à-dire sa mise en place définitive.

La présence de ce film pose des problèmes, notamment au découpage du verre car le film doit être conservé pour les opérations ultérieures de manutention et de montage. Or, une coupe mécanique du verre, généralement faite par moletage, nécessite un angle de coupe très ouvert qui n'est pas favorable à l'incision nette du film plastique. Par ailleurs, dans certains cas, comme par exemple le montage de la plaque, déjà coupée aux dimensions, dans un châssis de double vitrage, il peut être souhaitable d'enlever le film à la périphérie de la plaque de verre seulement et de conserver le reste du film jusqu'à la mise en service.

L'invention permet de résoudre ces différents problèmes.

En premier lieu, l'invention concerne un procédé de traitement d'une plaque de verre revêtue d'un film protecteur, caractérisé en ce qu'il comprend une opération de dénudage du verre consistant à inciser le film et à au moins décoller et soulever, par raclage, une bande étroite dudit film.

On entend par traitement, toute opération visant à préparer la plaque de verre avant sa mise en place ou utilisation définitive.

Par exemple, ledit traitement peut comprendre une opération de découpage de la plaque de verre. Dans ce cas, ladite opération de dénudage précède ladite opération de découpage.

Dans le cas d'un verre revêtu d'un film protecteur sur ses deux faces, le procédé est caractérisé en ce qu'il consiste à effectuer deux opérations de dénudage en vis-à-vis, sur les deux faces et à pratiquer ladite opération de découpage, par exemple par moletage dans l'une des bandes étroites ainsi définies.

Le traitement peut aussi comprendre une simple opération de dénudage marginal d'une plaque de verre déjà aux dimensions. Dans ce cas, l'opération de dénudage précitée consiste à inciser ledit film parallèlement à un bord de la plaque de verre et à faible distance de ce bord, pour délimiter une bande étroite marginale dudit film avant de décoller ladite bande et l'enlever par raclage.

L'invention concerne également un outil de traitement d'une plaque de verre revêtue d'un film protecteur, caractérisé en ce qu'il comporte au moins un organe d'incision dudit film et au moins une lame de raclage située en aval dudit organe d'incision et conformée pour au moins décoller et soulever une bande étroite dudit film au voisinage de l'incision.

L'outil de traitement peut être complété par un organe de découpage du verre placé pour entrer en contact avec le verre dans ladite bande étroite, en aval de ladite lame de raclage.

Dans la présente description, le terme "aval" désigne la position d'un élément de structure par rapport à un autre en prenant en considération la direction du déplacement relatif entre l'outil et la plaque de verre. Ainsi, un élément situé en aval d'un autre produit son effet sur le verre après cet autre élément.

L'invention sera mieux comprise et d'autres avantages de celle-ci apparaîtront mieux à la lumière de la description qui va suivre de plusieurs modes de réalisation d'un outil conforme à son principe, donnée uniquement à titre d'exemple et faite en référence aux dessins annexées, dans lesquels :
- la figure 1 est une vue schématique en perspective illustrant un agencement conforme à l'invention pour couper une plaque de verre ;
- les figures 2A, 2B, illustrent divers moyens pour réaliser l'incision avec une certaine sollicitation élastique ;
- les figures 3A, 3B illustrent des moyens pour réaliser le raclage avec une certaine sollicitation élastique ;
- la figure 4 illustre en perspective un outil complet rassemblant des éléments comparables à ceux de la figure 1, installés dans un même support pour équiper une machine automatique à couper le verre ;
- la figure 4A est une vue schématique partielle selon la flèche IV de la figure 4, montrant les éléments essentiels permettant de réaliser la coupe ;
- la figure 5 illustre en perspective un autre mode de réalisation d'un outil complet ;
- la figure 6 illustre un autre mode de réalisation d'un tel outil ; et
- la figure 7 illustre encore un autre mode de réalisation possible.

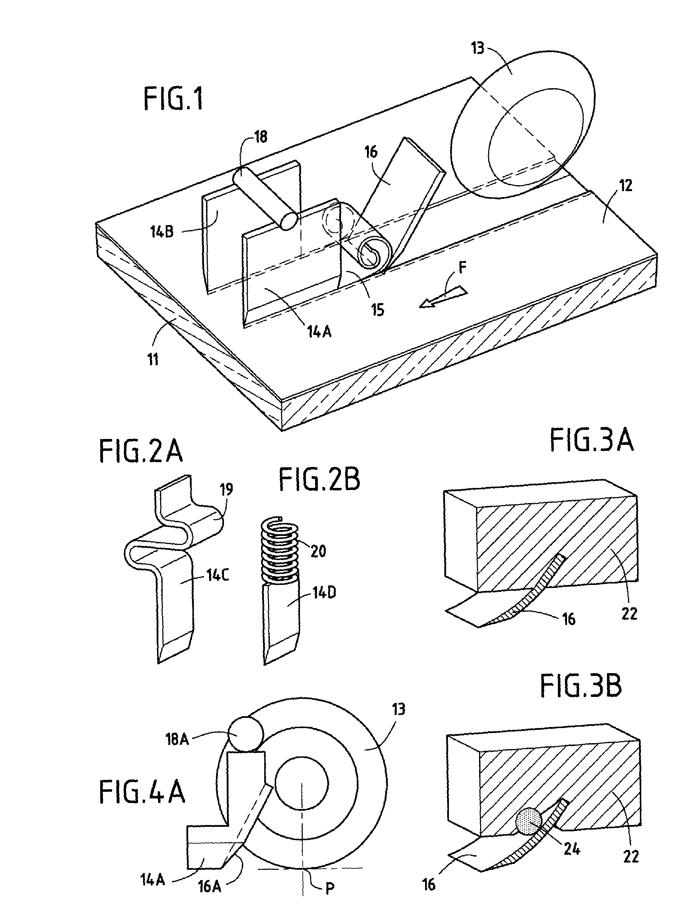

Sur la figure 1, on a représenté une plaque de verre 11 revêtue d'un film protecteur 12. Cette plaque doit être coupée à l'aide d'un organe de découpage. Si on désire couper le verre plat, il est classique d'utiliser une molette 13. D'autres organes de découpage du verre peuvent être envisagés. Pour les raisons indiquées ci-dessus, cette opération de moletage est précédée, selon l'invention, d'une opération de dénudage consistant à inciser le film 12 avec, selon l'exemple, deux organes d'incision 14A, 14B parallèles, disposés pour délimiter une bande étroite 15 dudit film et à au moins décoller et soulever par raclage une telle bande étroite de ce film. Dans l'exemple de la figure 1, la bande étroite est complètement décollée et enlevée à l'aide d'une lame de raclage 16 dont le bord actif est sensiblement perpendiculaire à une direction de déplacement relatif F entre l'outil et la plaque 11. Cependant, ce bord actif peut avoir une inclinaison différente pour faciliter l'évacuation (de côté) de la bande décollée. La lame 16 est inclinée d'un angle aigu par rapport au plan de la plaque de verre.

Dans l'exemple, chaque organe d'incision 14A, 14B comprend une lame tranchante disposée sensiblement perpendiculairement à ladite plaque de verre et dont l'arête est parallèle à la direction F.

Comme représenté, l'agencement est tel qu'il comporte en outre un organe de découpage du verre placé pour entrer en contact avec le verre dans le prolongement de ladite bande étroite 15 en aval de ladite lame de raclage. Comme indiqué précédemment, l'organe de découpage du verre est ici une molette 13, connue en soi.

Pour d'autres traitements, l'invention peut se résumer en la combinaison d'au moins un organe d'incision dudit film et d'au moins une lame de raclage située en aval dudit organe d'incision et conformée pour au moins décoller et soulever une bande étroite dudit film au voisinage de l'incision. Comme on le verra plus loin, il n'est pas nécessaire d'enlever complètement ladite bande étroite du film. Par exemple, dans le cas de l'utilisation d'une molette, il suffit de pratiquer une seule incision du film et de découper ladite plaque de verre par moletage dès que ladite bande étroite est simplement soulevée par la lame de raclage. Les figures 5 et 6 illustrent des modes de réalisation permettant ce type de traitement.

La dureté de l'organe d'incision doit être choisie pour ne pas rayer le verre. La dureté maximum se situe au voisinage de 50 HRC. Des lames de rasoir ou analogue ayant une dureté de 42 HRC sont parfaitement adaptées. On pourra utiliser un matériau analogue pour constituer les lames de raclage. Outre lesdites lames de rasoir en "tôle bleue", on pourra aussi utiliser des lames découpées dans des bandes métalliques ou même des plaques en matière plastique de dureté comparable.

Comme schématisé sur la figure 1, les deux lames 14A, 14B formant les deux organes d'incision parallèles sont élastiquement sollicitées vers la plaque de verre. Selon l'exemple, la sollicitation est donnée par un élément de matériau élastomère 18, élastiquement déformable, prenant appui sur les bords des organes d'incision opposés aux arêtes destinés à couper le film.

Les figures 2A, 2B, montrent d'autres exemples possibles pour obtenir la même sollicitation élastique. Selon la figure 2A, une telle lame 14C comporte une portion ondulée 19 procurant l'élasticité dans un sens perpendiculaire à la plaque de verre. Dans l'exemple de la figure 2B, un ressort hélicoïdal 20 est installé entre le bord opposé à l'arête et une surface de butée fixe (non représentée) du support de la lame 14D.

Une lame de raclage 16 est aussi de préférence sollicitée élastiquement contre la surface du verre. Selon l'exemple de la figure 3A, la lame 16 est encastrée dans son support 22 et la sollicitation élastique est procurée par sa propre élasticité. L'orientation de la lame est ici de l'ordre de 45° par rapport au plan de la plaque de verre cette valeur n'étant nullement critique. Selon l'exemple de la figure 3B, l'élasticité de la lame 16 est complétée par la présence d'un élément en matériau élastomère 24, élastiquement déformable, cylindrique, inséré dans un logement du support 22. La lame prend appui sur cet élément.

Dans le cas d'une coupe subséquente par moletage, ces éléments élastiques permettent de régler le problème du positionnement en hauteur des lames 14, 16 par rapport à la molette, la position du support commun à tous les éléments étant réglée en fonction de la molette 13, pour obtenir l'effort de coupe voulue.

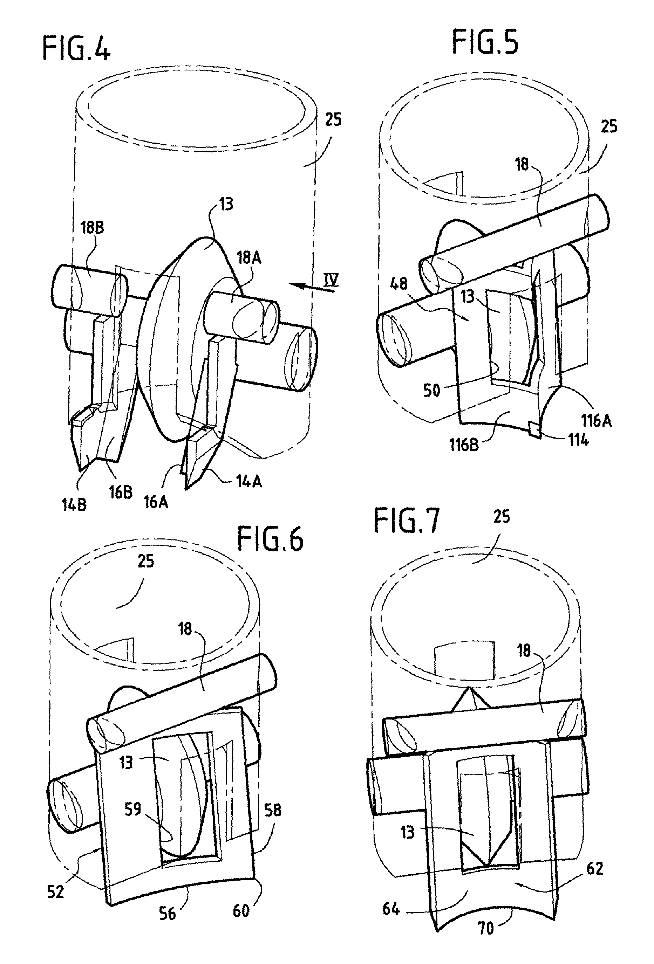

La figure 4 décrit une réalisation concrète de l'outil schématisé à la figure 1, dans laquelle tous les éléments sont portés par un même support 25, représenté en traits fantômes. Il est à noter que ce support, de type connu, est de forme générale cylindrique et de dimensions prédéterminées, pour s'insérer à la place d'un support standard ne comportant que la molette, dans une machine de découpe automatique de verre plat, de type connu.

On retrouve deux organes d'incision parallèles 14A, 14B, chacun en contact à sa partie supérieure avec un élément élastiquement déformable 18A, 18B. Ils sont situés de part et d'autre de la molette. La lame de raclage de la figure 1 est remplacée par deux lames de raclage 16A, 16B jouxtant respectivement les deux organes d'incision 14A, 14B. La molette s'étend en partie entre les deux ensembles constitués chacun d'une lame de raclage et d'un organe d'incision. Cependant, le point de contact P de la molette avec le verre est en aval des arêtes des deux organes d'incision et des deux lames de raclage 16A, 16B.

Dans l'exemple représenté, chaque ensemble précité est formé d'une même lame pliée, la lame de raclage 16A ou 16B se raccordant par une pliure de la tôle à un bord incliné de l'organe d'incision 14A ou 14B. Les deux ensembles sont symétriques par rapport à un plan contenant l'arête circulaire de la molette.

Cet agencement permet de rapprocher les lames et la molette et par conséquent d'inclure tous ces éléments dans le support. On a constaté que les deux lames de raclage situées dans le même plan incliné de part et d'autre de la molette permettent de réaliser le décollement et l'enlèvement de la bande étroite de film dans les mêmes conditions qu'illustrées à la figure 1.

Si le traitement de la plaque de verre ne consiste pas en une découpe mais comprend une simple opération de dénudage marginal d'une plaque de verre, comme indiqué précédemment, l'outil peut se résumer à un seul organe d'incision et à une seule lame de raclage, éventuellement combinés en une seule pièce comme représenté sur la figure 4.

Si le traitement s'applique à une plaque de verre revêtue d'un film protecteur sur chaque face, on pourra prévoir, pour la couper, deux outils situés de part et d'autre du plan dans lequel se situe ladite plaque de verre. Par exemple, l'un des outils pourra être conforme au système représenté sur la figure 4 et l'autre outil sera identique mais privé de molette. On pourra aussi procéder à partir d'un même outil en retournant la plaque de verre.

La figure 5 illustre une variante dans laquelle un organe d'incision unique 114 est flanqué de deux lames de raclage 116A, 116B divergentes. Un organe de découpage est situé dans le prolongement aval de l'organe d'incision et au voisinage de celui-ci. Il s'agit d'une molette 13. Comme représenté, l'organe d'incision 114 et les deux lames de raclage 116A, 116B sont combinés en une seule pièce 48 ayant globalement une forme rappelant celle d'un soc de charrue. L'organe d'incision 114 est constitué par la pointe où se rejoignent les deux lames de raclage 116A, 116B divergentes. La pièce comporte une fenêtre 50 dans laquelle s'engage en partie la molette 13. Cet agencement permet de rapprocher la pièce 48 constituant l'organe d'incision et les lames de raclage pour que l'ensemble puisse s'insérer dans le support 25. Celui-ci abrite un élément en élastomère 18, élastiquement déformable, contre lequel la pièce 48 est en appui.

Le mode de réalisation de la figure 6 est semblable à celui de la figure 5 avec un organe d'incision et une seule lame de raclage combinés en une seule pièce 52. Cette pièce se présente donc comme une plaque conformée et disposée pour présenter une arête inférieure 56 et une arête ascendante amont 58 affûtées pour inciser et soulever le film. L'organe de découpage, c'est-à-dire la molette 13, est disposé au voisinage et en aval de cette pièce 52. Cette dernière comporte aussi une fenêtre 59 dans laquelle s'engage une partie de la molette. L'incision se fait à la pointe 60 où se réunissent les deux arêtes 56, 58 et le raclage permettant de soulever le film est opéré par l'arête inférieure 56.

Dans les deux exemples des figures 5 et 6, la bande étroite de film qui est décollée de la plaque de verre n'est pas enlevée. On se contente de pratiquer une incision et d'écarter le film en le soulevant pour que la molette, située juste en aval, puisse entrer directement en contact avec le verre.

Selon le mode de réalisation représenté sur la figure 7, l'organe d'incision et de raclage est une lame 62 unique qui a, au moins au voisinage de son bord inférieur, la forme d'une tuile dont la surface concave 64 fait face au film non encore découpé.

L'arête inférieure 70 de la lame 62, partiellement en appui sur la plaque, est biseautée.

La lame 62 s'étend ici transversalement par rapport à la ligne de coupe de façon à entrer en contact avec la plaque sensiblement au milieu de l'arête 70. La lame est inclinée d'un angle α, aigu, par rapport à la verticale, en arrière, c'est-à-dire vers la molette 13.

A l'endroit où l'arête biseautée 70 est en contact avec la plaque, le film est soulevé et distendu. De part et d'autre de cette trace, l'arête biseautée, courbe, vient refendre et récupérer la bandelette décollée, laquelle s'enroule sur elle-même. La largeur de la bandelette dépend du rayon de courbure de ladite tuile et de l'angle α.

## Revendications

1. Procédé de traitement d'une plaque de verre (11) revêtue d'un film protecteur (12), **caractérisé en ce qu'**il comprend une opération de dénudage du verre consistant à inciser le film et à au moins décoller et soulever, par raclage, une bande étroite (15) dudit film.

2. Procédé selon la revendication 1, **caractérisé en ce que** ledit traitement comprend une opération de découpage (13) de ladite plaque de verre et que ladite opération de dénudage précède ladite opération de découpage.

3. Procédé selon la revendication 1, **caractérisé en ce que** ledit traitement comprend une opération de dénudage marginal dans laquelle l'opération de dénudage précitée consiste à inciser ledit film parallèlement à un bord de ladite plaque de verre et à faible distance de celui-ci pour délimiter une bande étroite marginale dudit film avant de décoller ladite bande et l'enlever par raclage.

4. Procédé selon la revendication 2, **caractérisé en ce que** ladite opération de dénudage consiste à pratiquer deux incisions parallèles (14A, 14B) dudit film pour délimiter une bande étroite (15) précitée, à enlever le film de ladite bande par raclage (16) et à découper (13) ladite plaque de verre par moletage dans la partie dénudée.

5. Procédé selon la revendication 2, **caractérisé en ce qu'**il consiste à pratiquer une seule incision (114, 60) dudit film et à découper ladite plaque de verre par moletage dès que ladite bande étroite est simplement soulevée.

6. Procédé selon l'une des revendications 2, 4 ou 5, pour une plaque de verre revêtue d'un film sur ses deux faces, **caractérisé en ce qu'**il consiste à effectuer deux opérations de dénudage précitées en vis-à-vis sur les deux faces et à pratiquer ladite opération de découpage dans une bande étroite précitée.

7. Outil de traitement d'une plaque de verre revêtue d'un film protecteur, **caractérisé en ce qu'**il comporte au moins un organe d'incision (14A-14D) dudit film et au moins une lame de raclage (16) située en aval dudit organe d'incision et conformée pour au moins décoller et soulever une bande étroite dudit film au voisinage de l'incision.

8. Outil selon la revendication 7, **caractérisé en ce qu'**il comporte en outre un organe de découpage (13) du verre placé pour entrer en contact avec le verre dans le prolongement de ladite bande étroite en aval de ladite lame de raclage.

9. Outil selon la revendication 8, **caractérisé en ce que** ledit organe de découpage du verre est une molette (13), connue en soi.

10. Outil selon l'une des revendications 7 à 9, **caractérisé en ce qu'**il comporte deux organes d'incision (14A, 14B) parallèles disposés pour délimiter une bande étroite (15) dudit film.

11. Outil selon la revendication 10, **caractérisé en ce que** chaque organe d'incision comprend une lame tranchante (14A, 14B), sensiblement perpendiculaire à ladite plaque de verre.

12. Outil selon l'une quelconque des revendications 7 à 11, **caractérisé en ce qu'**il comporte au moins une lame de raclage (16) dont le bord actif est sensiblement perpendiculaire à une direction de déplacement relatif entre l'outil et la plaque, ladite lame étant inclinée d'un angle aigu par rapport au plan de ladite plaque de verre.

13. Outil selon la revendication 10 ou 11, et la revendication 12, **caractérisé en ce qu'**il comporte deux lames de raclage (16A, 16B) jouxtant respectivement les deux organes d'incision (14A, 14B), une molette (13) s'étendant en partie entre les deux ensembles constitués chacun d'une lame de raclage et d'un organe d'incision.

14. Outil selon la revendication 13, **caractérisé en ce que** chaque ensemble précité est formé d'une même lame pliée.

15. Outil selon la revendication 8 ou 9, **caractérisé en ce qu'**il comporte un organe d'incision et une lame de raclage combinés en une seule pièce (52) disposée pour présenter une arête inférieure (56) et une arête ascendante amont (58) affûtées pour inciser et soulever ledit film, un organe de découpage (13) étant disposé au voisinage et en aval de cette pièce.

16. Outil selon la revendication 8 ou 9, **caractérisé en ce qu'**il comporte un organe d'incision (114) flanqué de deux lames de raclage (116, 116B) divergentes et un organe de découpage (13) situé dans le prolongement aval de l'organe d'incision et au voisinage de celui-ci.

17. Outil selon la revendication 8 ou 9, **caractérisé en ce qu'**il comporte un organe d'incision et de raclage (62) ayant la forme d'une tuile.

18. Outil selon l'une des revendications 7 à 17, **caractérisé en ce que** le ou chaque organe d'incision et la ou chaque lame de raclage sont montés de façon à être sollicités élastiquement contre la plaque de verre.
